# EUROPÄISCHE PATENTANMELDUNG

(11) **EP 1 400 708 A1**
(43) Veröffentlichungstag der Anmeldung: **24.03.2004**
(21) Anmeldenummer: 03019810.5
(22) Anmeldetag: 30.08.2003
(51) Int. Cl.: F16B 35/00, F16B 33/00

(54) **Justierschraube**

(30) Priorität: 21.09.2002 DE 10244010
(71) Anmelder: Hensoldt AG, 35576 Wetzlar (DE); Hensoldt Systemtechnik GmbH, 35576 Wetzlar (DE)
(72) Erfinder: Schlierbach, Armin, 35638 Leun (DE); Polzer, Gerd, 35586 Wetzlar-Hermannstein (DE); Scheidel, Norbert, 35625 Hüttenberg (DE)
(74) Vertreter: Schmid, Wolfgang

(57) **Zusammenfassung**

Eine Justierschraube (1), insbesondere für ein Zielgerät, weist ein Gewinde (2) und eine Aufnahme für eine Dichtung auf. Die Aufnahme für die Dichtung ist durch eine umlaufende Nut (4) im Bereich des Gewindes gebildet.

## Beschreibung

Die Erfindung betrifft eine Justierschraube, insbesondere für ein Zielgerät, nach der im Oberbegriff von Anspruch 1 näher definierten Art.

Gattungsgemäße Schrauben sind aus der WO 00/57070 A1, der DE 36 00 186 C2 oder der US-A-2 928 466 bekannt.

Bei sämtlichen dieser Schrauben wird ein nachgiebiges Material eingesetzt, welches eine Dichtung oder auch eine Losdrehslcherung bilden soll. Bei sämtlicher dieser Lösungen wird hierzu das nachgiebige Material bzw. der Kleber auf die Gewindegänge aufgetragen.

In der JP 09189319 A befindet sich das Dichtungsmaterial in einem Längsschlitz, der in das Gewinde eingebracht ist.

Der Nachteil aller dieser bekannten Schrauben ist jedoch, dass die Materialien keine gleichbleibenden Eigenschaften aufweisen und so zu Problemen bei der Montage führen. Ein weiterer Nachteil besteht darin, dass das Losdrehmoment nicht genau eingestellt werden kann und deshalb meist zu hoch ist, so dass vor allem bei einer längeren Nicht-Betätigung der Schraube ein erheblicher Mehraufwand entsteht.

Aus dem allgemeinen Stand der Technik sind des weiteren Schrauben mit Dichtringen am Schraubenkopf bekannt. Hierbei ist allerdings ein sehr großer Bauraum zur Aufnahme der Schraube erforderlich.

Es ist daher Aufgabe der vorliegenden Erfindung, eine Justierschraube zu schaffen, welche einerseits ein geringes Losdrehmoment aufweist und andererseits eine dauerhafte Dichtfunktion gewährleistet.

Erfindungsgemäß wird diese Aufgabe durch die in Anspruch 1 genannten Merkmale gelöst.

Die erfindungsgemäße Nut zur Aufnahme der Dichtung im Bereich des Gewindes legt den Punkt, an dem sich die Dichtung befindet, exakt fest. Dies führt zusammen mit der Tatsache, dass durch die homogene Gestaltung der Nut im Vergleich zu einem Gewinde die Dichtung in einer genau festgelegten Art und Weise mit dem Material der Justierschraube verbunden ist, vorteilhafterweise dazu, dass das Losdrehmoment für die erfindungsgemäße Justierschraube sehr exakt eingestellt werden kann, was gerade für den Zweck des Justierens sehr wichtig ist.

Die Dichtung liegt außerdem direkt an den Gewindegängen an, so dass das nachgiebige Dichtungsmaterial eine optimale Dichtfunktion gewährleistet.

Eine einfache Herstellmöglichkeit der erfindungsgemäßen Justierschraube kann sich in einer vorteilhaften Ausgestaltung der Erfindung dadurch ergeben, dass die Nut durch eine Freidrehung des Gewindes gebildet ist.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Es zeigt:
- Figur 1: eine Draufsicht auf die erfindungsgemäße Justierschraube;
- Figur 2: eine Seitenansicht der Justierschraube mit der erfindungsgemäßen Nut;
- Figur 3: die Justierschraube aus Figur 2 mit einer in die Nut eingesetzten Dichtung.

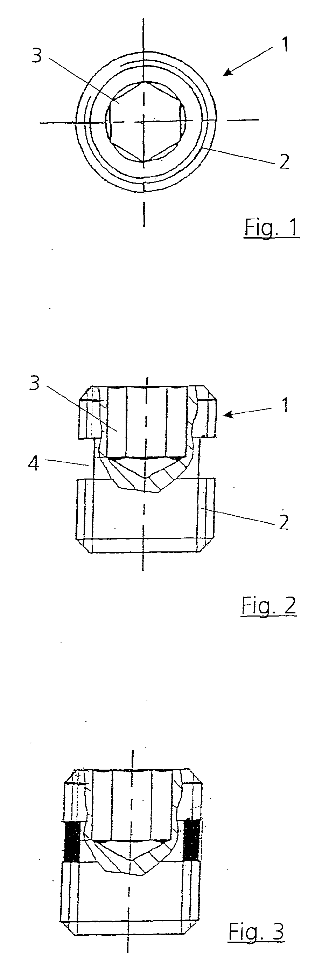

Eine in Figur 1 dargestellte Justierschraube 1 weist an ihrer Außenseite ein Gewinde 2 und an ihrer Oberseite eine Vertiefung 3 zur Aufnahme eines Inbusschlüssels auf. Selbstverständlich könnte die Vertiefung 3 auch als Torx-Aufnahme, als Schlitz oder als Kreuzschlitz für entsprechende Montagewerkzeuge ausgebildet sein.

In Figur 2 ist erkennbar, dass sich ungefähr in der Mitte des im wesentlichen über die gesamte Länge der Justierschraube 1 verlaufenden Gewindes 2 eine umlaufende Nut 4 befindet. Die Anbringung der Nut 4 ungefähr in der Mitte des Gewindes 2 der Justierschraube 1 erhöht deren Stabilität. Dadurch, dass das Gewinde 2 mit Ausnahme der Nut 4 über die gesamte Länge der Justierschraube 1 verläuft, kann die Gesamtlänge der Justierschraube 1 sehr gering sein.

Die Nut 4 ist im vorliegenden Fall durch eine Freidrehung des Gewindes 2 gebildet. Alternativ hierzu wäre es auch möglich, bereits den Rohling der Justierschraube 1 mit der Nut 4 zu versehen und das Gewinde 2 erst anschließend durch Gewinderollen oder ein ähnliches geeignetes Verfahren einzubringen.

In Figur 3 ist der Zweck der Nut 4 erkennbar. So ist nämlich in der Nut 4 eine Dichtung 5 eingesetzt, welche beim Einschrauben der Justierschraube 1 in ein entsprechendes, nicht dargestelltes Innengewinde für eine Abdichtung der Schraubverbindung zwischen dem Innengewinde und dem Gewinde 2 sorgt. Hierbei ist hervorzuheben, dass sich die Gewindegänge des Innengewindes in die Dichtung 5 eingraben und so die Dichtheit herstellen.

Die Dichtung 5 besteht vorzugsweise aus einem Elastomer, insbesondere aus Silikon oder einem gummiähnlichen Material. Wenn Silikon als Material für die Dichtung 5 verwendet wird, so haben thermische Einflüsse nur einen geringen Einfluss auf das Losdrehmoment der Justierschraube 1. Dieses Losdrehmoment ist gerade bei Silikon verhältnismäßig gering.

Als besonders gut geeignet zum Verbinden der Dichtung 5 mit der Nut 4 hat sich das aus dem allgemeinen Stand der Technik bekannte Verfahren des Vulkanisierens erwiesen, was einen sehr guten Halt der Dichtung 5 innerhalb der Nut 4 gewährleistet und sehr einfach ausgeführt werden kann.

Die Justierschraube 1 kann beispielsweise zur Verstellung eines Visiers bei einem Zielgerät verwendet werden, um dort einen Spiegel oder ähnliches zu verstellen. Bei dieser Verwendung ist es erforderlich, dass das sich an dem Visier befindliche Innengewinde vor eindringender Feuchtigkeit und dergleichen geschützt wird. Dies wird durch die oben beschriebene Justierschraube 1 mit der Dichtung 5 gewährleistet. Des weiteren verhindert die Dichtung 5 der Justierschraube 1 auch bei Erschütterungen des Visiers ein Verdrehen bzw. Verstellen desselben.

## Patentansprüche

1. Justierschraube, insbesondere für ein Zielgerät, mit einem Gewinde und mit einer Aufnahme für eine Dichtung, **dadurch gekennzeichnet, dass** die Aufnahme für die Dichtung (5) durch eine umlaufende Nut (4) im Bereich des Gewindes (2) gebildet ist.

2. Justierschraube nach Anspruch 1, **dadurch gekennzeichnet, dass** die Nut (4) durch eine Freidrehung des Gewindes (2) gebildet ist.

3. Justierschraube nach Anspruch 1 oder 2, **dadurch gekennzeichnet, dass** die Nut (4) wenigstens annähernd in der Mitte des Gewindes (2) angeordnet ist.

4. Justierschraube nach einem der Ansprüche 1, 2 oder 3, **dadurch gekennzeichnet, dass** die Dichtung (5) aus einem Elastomer besteht.

5. Justierschraube nach Anspruch 4, **dadurch gekennzeichnet, dass** das Elastomer Silikon ist.

6. Justierschraube nach einem der Ansprüche 1 bis 5, **dadurch gekennzeichnet, dass** die Dichtung (5) durch Vulkanisieren mit der Nut (4) verbunden ist.

7. Justierschraube nach einem der Ansprüche 1 bis 6, **dadurch gekennzeichnet, dass** das Gewinde (2) im wesentlichen über die gesamte Länge der Justierschraube (1) verläuft.
